# EUROPEAN PATENT SPECIFICATION

(11) **EP 1 921 921 B1**
(45) Date of publication and mention of the grant of the patent: **16.12.2009**
(21) Application number: 06783887.0
(22) Date of filing: 11.08.2006
(51) Int. Cl.: A22B 3/08

(54) **Method for the sanitary slaughter of an animal**
Verfahren zum hygienischen Schlachten eines Tieres
Méthode pour tuer un animal de manière sanitaire

(30) Priority: 12.08.2005 NL 1029721; 09.11.2005 NL 1030379
(43) Date of publication of application: 21.05.2008
(73) Proprietor: Kiezebrink, Harm, 8161 ZA Epe (NL)
(72) Inventor: Kiezebrink, Harm, 8161 ZA Epe (NL)
(74) Representative: Habets, Winand
(86) International application number: PCT/NL2006/000420
(87) International publication number: WO 2007/021178

(56) References cited:
- FR-A- 1 137 539
- FR-A- 1 324 046
- GB-A- 1 587 558
- US-A- 4 273 119
- US-A- 5 249 570

## Description

The present invention relates to a method for the sanitary slaughter of an animal.

In certain circumstances it is necessary to sanitarily slaughter animals, such as poultry and pigs, for example in order to prevent the spreading of a contagious disease such as fowl pest, New Castle-disease, foot and mouth disease etc. The contagious disease can be of a viral or bacterial nature. Especially in the case of viral disease treatment is often impossible and the animals have to be destroyed. For a variety of reasons, it is desirable that this sanitary slaughter takes place as fast as possible, amongst others for reasons of animal welfare, to prevent further contamination and from the perspective of costs.

It is known to kill animals using a gas such as argon, carbon dioxide or carbon monoxide. According to a first possibility this is done by filling the space, in which the animals which are to be sanitarily slaughtered are kept, with the gas. This is expensive, time-consuming and leads to the use of more gas than is desirable. In the case of argon this leads to markedly increased costs, and in the case of carbon monoxide this leads to an increased risk, since even in low concentrations this gas is also lethal to humans. In order to address these problems it is known to bring the animals in a sealed contrainer, which is subsequently filled with gas to kill the animals. After the animals have been killed, they are removed from the container after which the cycle is repeated.

From a perspective of costs, animal welfare and efficiency, the known methods leave room for improvement.

The object of the present invention is to provide a method according to the preamble which makes it possible to sanitarily slaughter animals faster while using less manpower and with reduced danger for the public health and to the personnel who carry out the sanitary slaughter.

To this end, the method according to the invention is characterised in that at least one body part selected from the nose and the mouth of the animal is covered with a foam prepared from a liquid and a gas, wherein the liquid contains a surfactant, and the gas used for making the foam comprises a gas component having the property to kill and/or narcotize the animal.

Although a foam bubble has a very thin liquid membrane, it appears to constitute a barrier that is sufficient for retraining a killing gas. Not only this aspect, but also the fact that the foam is visible and that it is thus evident where the highest concentrations of killing and/or narcotizing gas are located, increases the safety of the personnel who carry out the sanitary slaughter. If desired, the atmosphere above the foam can be ventilated in order to prevent the workers from being exposed to elevated concentrations of the killing and/or narcotizing gas. When the occasion arises, the method effectively restricts the spreading of pathogens such as an infectious virus, since the number of persons necessary for carrying out the sanitary slaughter is limited, and contaminated animals are shielded from the environment effectively. The foam adheres to the animal and when it inhales the gas in the foam it will die quickly. For the animal's welfare it is preferable that the foam itself is inhaled as little as possible. This can be achieved by choosing a suitable bubble size. The larger the bubble, the lower the number of bubblues the animal will inhale and the higher the amount of gas from the bubble that the animal will inhale. Big bubbles tend to burst more easily thus releasing their contents. If desired, the composition of the liquid membrane of the bubble can be chosen to have such a strength that the bubble bursts upon inhaling. The strength depends inter alia on the surfactant(s) used, the concentration thereof, and on known auxiliary agents for making bubbles such as glycerol. A composition resulting in bubbles having a suitable strength can be determined experimentally for the surfactants used, and needs no further elucidation. It is believed that the method is not only suitable for the sanitary slaughter of animals contaminated with a contagious disease, but also for the extermination of rodent pests such as of rats and mice at farms, in granaries and the like. It is not necessary that the animals are already contaminated. Sanitary slaughter can also take place as a precautionary measure, or to create an animal-free area around a contaminated area. An example of a suitable willing gas is nitrogen in a significantly elevated concentrations relative to the atmosphere. It is favourable if the gas used for making the foam has a density that is greater than that of air. An increased density is accomplished by a lowered temperature, and by choosing the atomic weight and/or molecular weight of the gas or the various gas components constituting the gas. In case of flammable killing gases (such as carbon monoxide) the likelihood of a fire breaking out is reduced by incorporating the killing gas in the foam. In the scope of the present invention the term "killing gas component" means any gas component whose physiological properties have a killing effect (for example carbon monoxide) or alternatively, simply by diluting or replacing, reduce the oxygen concentration in a gas used to form the foam (including a gas mixture, such as air) such that the death of the animal is accelerated. An example of the latter is for example argon or nitrogen. If an inert (not physiologically active) killing gas component is used, the oxygen concentration is reduced to less than 15% by volume, preferably to less than 12% by volume based on the total gas mixture used to form foam.

### US 4.273.119 discloses a method for supplying inhalable substances to an animal by means of a mask.

Advantageously, the killing gas component is carbon dioxide and is present in the gas at a concentration of at least 60% by volume.

Thus, a foam is provided containing a gas that is sufficiently killing, while the release of gas in the atmosphere does not pose any immediate danger and the risk to the personnel who perform the sanitary slaughter of being exposed to an adverse concentration of the gas, is also reduced.

In order to avoid that the gas halts the respiration of the animals, causing the death to be delayed, it is preferable that in the case where a physiologically active killing gas component is used, some oxygen is present in the gas. In particular, it is preferred that the gas contains oxygen as an auxiliary gas.

The oxygen is present in a concentration that reduces the inhibition of the respiration which occurs in the absence of oxygen. This concentration depends on the particular animal species and the composition of the gas used, and can be determined by means of routine experiments. The use of oxygen as an auxiliary gas is for example advantageous in the case where carbon dioxide is used as a killing gas.

Advantageously, the liquid contains a disinfecting component.

By using this the spreading of a disease can be contained. Also the likelihood of workers transmitting the disease further, which could lead to new contamination niduses, is reduced. Since foam is used, a relatively low amount of disinfecting component can be used which has little negative effect in the case where the animals which are to be sanitarily slaughtered are not incinerated but are left to degrade biologically by rotting.

Advantageously, the disinfecting component is selected from a protease, a ligand or receptor which inhibits bonding of an infectious organism to a host, an antibiotic and an active chlorine compound.

Regarding said ligand or receptor the following is noted. Some micro-organisms, in particular viruses, have to interact in a specific way with the host in order to accomplish an infection, for example penetrate a specific host cell. The liquid could contain a ligand of receptor (including a receptor-fragment, and any molecule having the particular receptor activity, such as for example an antibody) that binds to the micro-organism. Thus, the likelihood of the micro-organism contaminating a host can be reduced. When more than 1 disinfecting component is used their mutual compatibility should be taken into account.

Advantageously, the active chlorine compound is selected from chlorine (Cl₂) and a compound with hypochlorite (OCl⁻) as active ion.

These active chlorine compounds have a broad spectrum of activity, allowing a plurality of organisms to be eliminated. In addition, they are not so toxic that they would cause a waste problem.

A disinfecting effect can also be achieved if the liquid has a pH <3 or >11.

The pH is preferably <2. If one or more disinfecting components are also present, the chosen pH should be compatible with these disinfecting components if one wishes to preserve the disinfecting activity thereof.

A first important embodiment is characterized in that a plurality of animals is sanitarily slaughtered, the said animals being present in a space, and the animals in the space are covered with a layer of foam.

This can be done in a simple manner, for example using a. foam gun as is used for example for extinguishing fires. This operating method requires extremely little manpower. The space may be a pasture (such as for ducks and chickens), a tent, into which the animals are driven, or a space in which the animals are kept such as a stable.

In order to facilitate the gathering of the animals, it can be advantageous if, after the animals have been killed, the layer of foam is at least partially broken down by means of a defoamer.

Such agents are known, for example silicone based defoamers.

A second important embodiment is characterized in that the animal is placed in a container which contains a layer of the foam, and the animal is introduced into the layer of foam.

This embodiment is particularly useful for animals kept in cages, such as poultry, wherein the container is moved along the cages and the animals are introduce directly from the cages into the container where, being immersed in the foam, they die quickly.

Advantageously, this embodiment of the method is characterized in that the container has an opening for introducing a bird in the container, said opening having a largest cross section of 15 to 40 cm, and the body of the container having a cross section of at least 50 cm.

This leaves sufficient space for quickly introducing the animals which are to be sanitarily slaughtered into the container, while gas escaped from burst foam bubbles still remains captured in the container. Especially, if the gas or the killing and/or narcotizing gas component(s) thereof have a high molecular weigh or atomic weight, it will descend and form a blanket on top of the animals not yet killed, which may contribute to an accelerated death of the animals.

It is preferred that an inner bag is present in the container, and that the foam is inside the inner bag.

The inner bag containing the animals can then be discharged, incinerated or taken to a dumping site, whereas the container is the sturdy part which is handled and which protects the inner bag from becoming damaged. The container is for example a roll container, such as a garbage container, a container for organic matter etc., which is preferably provided with an opening at its top, or alternatively at its sidewall near the top, said opening being barely larger than the animal to be introduced into the inner bag. In the case where it is taken to a dumping site, the inner bag is preferably manufactured out of biodegradable plastic.

The container can also be a bag which is provided with at least 1 loop, where both the bag and loop have such a strength that they do not give way if the bag is filled with animals.

The bag can be lifted at its loop. The bag preferably possesses a side that can be opened, advantageously the underside, through which the inner bag can be removed from the bag. By means of the loop, the bag can for example be lifted above a dumping site or transporting truck, and in accordance with the preferred embodiment wherein the bag is provided with a reclosable opening at its underside, its contents can be discharged via that reclosable opening.

The bag suitable for application with the method of the invention, may have an opening with a largest cross section of 15-40 cm and the body of the container having a cross section of at least 50 cm, and the bag being provided with at least 1 loop near its top.

The bag may be manufactured from, for example, canvas or from optionally reinforced plastic, and may for example be manufactured using the techniques and materials as are known for plastic bags (called ICBs or Bigbags) for the transport of building materials such as sand.

Advantageously, the bag has a reclosable opening, preferably at its underside, through which its contents can be removed.

FR 1.324.046 discloses a bag having an opening with a largest cross section larger than the body of the bag.

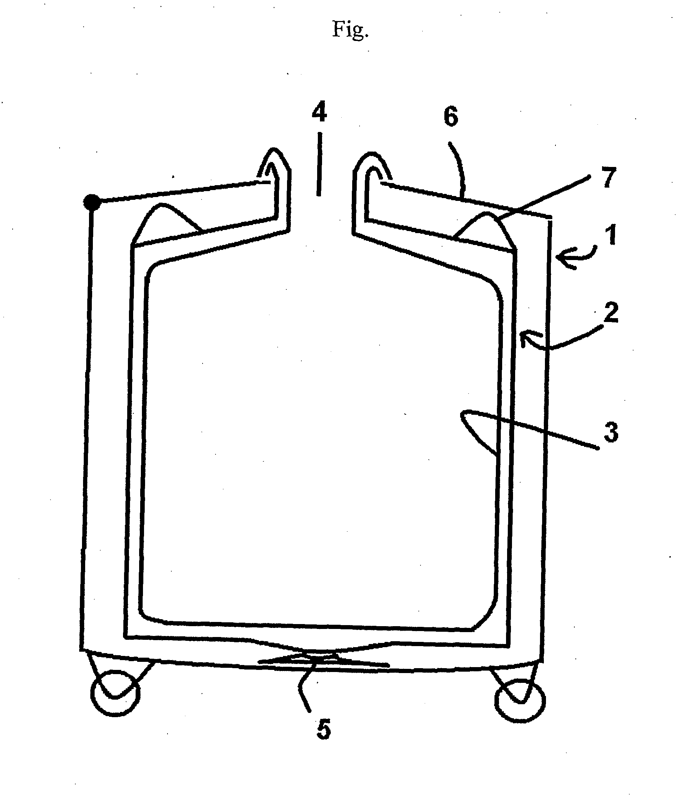

A bag suitable for use in the invention will now be elucidated with reference to the only figure.

The figure shows a container 1, which contains a bag 2 according to the invention. In the bag 2 an inner bag 3 is provided. In the inner bag a layer of foam A is present (not shown). This foam A is prepared from a surfactant-containg liquid and a gas. The foam A can be prepared by means of a device for blowing bubbles (formation of foam with gas at low pressure) or by means of gas at high pressure and a nozzle (for example a foam gun). The gas comprises a gas component that kills animals, for example carbon dioxide, that acts by displacing oxygen from the body of the animal. The container 1 has wheels for simple movement of the bag 2, for example between rows of cages of poultry which are to be sanitarily slaughtered.

In general, the inner bag 2 will initially contain at least an amount of foam A equal to the void volume ultimately present between the animals stacked in the inner bag 2. At its top bag 2 has a relatively narrow opening 3, through which animals may be introduced in the inner bag 3. The animals fall through the foam A in which they die a quick death. In general, after a sufficient quantity of animals has been collected in the inner bag 3, the inner bag 3 will be sealed together with a major portion of the killing and/or narcotizing gas component of the gas.

At the underside of the bag 2 a sealed, releasable, reclosable large opening 5 is situated, through which an inner bag 3 filled witch sanitarily slaughtered animals can be discharge. In order to remove the inner bag 3 from the bag 2, the lid 6 of the mobile container 1 is opened, and the bag 2 is lifted out of the mobile container 1 at loops 7, 7' in accordance with the embodiment of the method according to the invention described here. The releasable opening 5 is opened above a dumping site or the loading platform of a truck as a result of which the contents of the bag 2 land at the desired place. In order to open the releasable opening 5 a draw-string can be present (not shown). The opening 5 of bag 2 will subsequently be closed again and the bag 2 will be provided with a new inner bag 3 (in arbitrary order). After introducing foam A at a suitable time, the sanitarily slaughtering can be continued. Optionally, it may be decided not to use an inner bag 3.

It is preferred that during filing the opening of at least the inner bag 3 is anchored in an opened state, for example by clamping against lid 6.

## Claims

1. Method for the sanitary slaughter of an animal, **characterized in that** at least one body part selected from the nose and the mouth of the animal is covered with a foam prepared from a liquid and a gas, wherein the liquid contains a surfactant, and the gas used for making the foam comprises a gas component having the property to kill and/or narcotize the animals.

2. Method according to claim 1, wherein the killing gas component is carbon dioxide and is present in the gas at a concentration of at least 60% by volume.

3. Method according to claim 1 or 2, wherein the gas contains oxygen as an auxiliary gas.

4. Method according to any one of claims 1 to 3, wherein the liquid contains a disinfecting component.

5. Method according to claim 4, wherein the disinfecting component is selected from a protease, a ligand or receptor which inhibits binding of an infectious organism to a host, an antibiotic and an active chlorine compound.

6. The method according to any of the preceding claims, wherein the active chlorine compound is selected from chlorine (Cl₂) and a compound with hypochlorite (ClO⁻) as active ion.

7. The method according to any of the preceding claims, wherein the liquid has a pH <3 or >11.

8. The method according to any of the preceding claims, **characterized in that** a plurality of animals is sanitarily slaughtered, the said animals being present in a space, and the animals in the space are covered with a layer of foam.

9. Method according to claim 8, **characterized in that**, after the animals have been killed, the layer of foam is at least partially broken down by means of a defoamer.

10. Method according to any one of claims 1 to 7, **characterized in that** the animal is placed in a container, (2) which contains a layer of the foam, and the animal is introduced into the layer of foam.

11. Method according to claim 10, **characterized in that** the container, (2) has an opening (4) for introducing a bird in the container, said opening (4) having a largest cross section of 15 to 40 cm, and the body of the container (2) having a cross section of at least 50 cm.

12. Method according to claim 10 or 11, wherein an inner bag (3) is present in the container (2), and that the foam is present in the inner. bag (3).

13. Method according to any one of claims 10 to 12, wherein the container (2) is a bag provided with at least 1 loop (7), said bag (2) and loop (7) having such a strength that they do not give way if the bag (2) is filled with animals.

14. The method according to claim 13, said bag (2) having an opening (4) with a largest cross section of 15-40 cm near its top and the body of the container (2) having a cross section of at least 50 cm, and the bag being provided with at least 1 loop (1) near its top.

15. The method according to claim 14, wherein the bag (2) is provided with a reclosable opening (5) at its underside.

## Patentansprüche

1. Verfahren zum hygienischen Schlachten eines Tieres,
**dadurch gekennzeichnet,**
**dass** mindestens ein Körperteil von Nase und Mund des Tieres mit einem Schaum bedeckt wird, der aus einer Flüssigkeit und einem Gas hergestellt ist,
wobei die Flüssigkeit ein oberflächenaktives Mittel enthält und das Gas, welches zur Herstellung des Schaums verwendet wird, eine Gaskomponente umfasst, die geeignet ist, das Tier zu töten und/oder zu betäuben.

2. Verfahren nach Anspruch 1, **dadurch gekennzeichnet, dass** die tötende Gaskomponente Kolilendioxid ist und dass dieses in einer Konzentration von mindestens 60 Voluinenprozent im Gas vorliegt.

3. Verfahren nach Anspruch 1 oder 2, **dadurch gekennzeichnet, dass** Sauerstoff als zusätzliche Gas in dem Gas enthalten ist.

4. Verfahren nach einem der Ansprüche 1 bis 3, **dadurch gekennzeichnet, dass** die Flüssigkeit ein Desinfektionsmittel enthält.

5. Verfahren nach Anspruch 4, **dadurch gekennzeichnet, dass** das Desinfektionsmittel aus einer Protease, einem Liganden oder Rezeptor, der die Bindung eines infektiösen Organismus an einen Wirt hemmt, einem Antibiotikum und einer aktive Chlorverbindung ausgewählt wurde.

6. Verfahren nach einem der vorangegangenen Ansprüche, **dadurch gekennzeichnet, dass** die aktive Chlorverbindung aus Chlor (Cl₂) und einer Verbindung mit Hypochlorit (ClO⁻) als aktivem Ion ausgewählt wurde.

7. Verfahren nach einem der vorangegangenen Ansprüche, **dadurch gekennzeichnet, dass** die Flüssigkeit einen pH-Wert von <3 oder >11 besitzt.

8. Verfahren nach einem der vorangegangenen Ansprüche, **dadurch gekennzeichnet, dass** eine Mehrzahl von Tieren hygienisch geschlachtet wird, die Tiere an einem Ort vorhanden sind und die Tiere an dem Ort mit einer Schicht aus Schaum bedeckt werden.

9. Verfahren nach Anspruch 8, **dadurch gekennzeichnet, dass**, nachdem die Tiere getötet wurden, die Schicht aus Schaum zumindest teilweise mittels eines Entschäumers durchbrochen wird.

10. Verfahren nach einem der Ansprüche 1 bis 7, **dadurch gekennzeichnet, dass** das Tier in einem Behälter (2), der eine Schicht aus dem Schaum enthält, platziert wird und dass das Tier in die Schicht aus Schaum eingebracht wird.

11. Verfahren nach Anspruch 10, **dadurch gekennzeichnet, dass** der Behälter (2) eine Öffnung (4) aufweist, um einen Vogel in den Behälter einzubringen,
wobei diese Öffnung (4) an ihrem breitesten Querschnitt 15 bis 40 cm breit ist und dass das Gehäuse des Behälters (2) einen Querschnitt von mindestens 50 cm aufweist.

12. Verfahren nach Anspruch 10 oder 11, **dadurch gekennzeichnet, dass** eine innere Tasche (3) in dem Behälter (2) angeordnet ist, wobei sich der Schaum in der inneren Tasche (3) befindet.

13. Verfahren nach einem der Ansprüche 10 bis 12, **dadurch gekennzeichnet, dass** der Behälter (2) eine Tasche mit wenigstens einer Schlaufe (7) ist, wobei die Tasche (2) und die Schlaufe (7) eine solche Stärke aufweisen, dass sie nicht nachgeben, wenn die Tasche (2) mit Tieren gefüllt wird.

14. Verfahren nach Anspruch 13, **dadurch gekennzeichnet, dass** die Tasche (2) eine Öffnung (4) nahe der Oberseite aufweist, welche einen größten Querschnitt von 15-40 cm besitzt, dass das Gehäuse des Behälters (2) einen Querschnitt von mindestens 50 cm besitzt und dass die Tasche nahe ihrer Oberseite mit wenigstens einer Schlaufe (1) versehen ist.

15. Verfahren nach Anspruch 14, **dadurch gekennzeichnet, dass** die Tasche (2) mit einer wiederverschließbaren Öffnung (5) an ihrer Unterseite versehen ist.

## Revendications

1. Méthode pour l'abattage sanitaire d'un animal, **caractérisée en ce qu'**au moins une des parties du corps choisie parmi le nez et la bouche de l'animal est recouverte de mousse préparée à partir d'un liquide et d'un gaz, le liquide contenant un agent tensio-actif, et le gaz utilisé pour produire la mousse comprenant un composant gazeux ayant la propriété de tuer et/ou de droguer l'animal.

2. Méthode selon la revendication 1, dans laquelle le composant gazeux mortel est le dioxyde de carbone et est présent dans le gaz à une concentration d'au moins 60% en volume.

3. Méthode selon la revendication 1 ou la revendication 2, dans laquelle le gaz contient de l'oxygène comme gaz auxiliaire.

4. Méthode selon l'une quelconque des revendications 1 à 3, dans laquelle le liquide contient un composant désinfectant.

5. Méthode selon la revendication 4, dans laquelle le composant désinfectant est choisi parmi une protéase, un ligand ou un récepteur qui inhibe la fixation d'un organisme infectieux à un hôte, un antibiotique et un composé chloré actif.

6. Méthode selon l'une quelconque des revendications précédentes, dans laquelle le composé chloré actif est choisi parmi le chlore (Cl₂) et un composé contenant l'hypochlorite (ClO⁻) comme ion actif.

7. Méthode selon l'une quelconque des revendications précédentes, dans laquelle le liquide a un pH <3 ou >11.

8. Méthode selon l'une quelconque des revendications précédentes, **caractérisée en ce qu'**une pluralité d'animaux est abattue de manière sanitaire, lesdits animaux étant présents dans un espace, et les animaux présents dans cet espace étant couverts d'une couche de mousse.

9. Méthode selon la revendication 8, **caractérisée en ce que**, après que les animaux aient été abattus, la couche de mousse est au moins partiellement décomposée au moyen d'un anti-mousse.

10. Méthode selon l'une quelconque des revendications 1 à 7, **caractérisée en ce que** l'animal est placé dans un récipient (2) qui contient une couche de mousse, et **en ce que** l'animal est introduit dans la couche de mousse.

11. Méthode selon la revendication 10, **caractérisée en ce que** le récipient (2) comporte une ouverture (4) pour introduire un oiseau dans le récipient, ladite ouverture (4) présentant une section maximale de 15 à 40 cm, et le corps du récipient (2) présentant une section d'au moins 50 cm.

12. Méthode selon la revendication 10 ou la revendication 11, dans laquelle un sac interne (3) est présent dans le récipient (2), et en ce que de la mousse est présente dans le sac interne (3).

13. Méthode selon l'une quelconque des revendications 10 à 12, dans laquelle le récipient (2) est un sac équipé d'au moins une lanière (7), ledit sac (2) et ladite lanière (7) présentant une résistance telle qu'ils ne se rompent pas si le sac (2) est rempli d'animaux.

14. Méthode selon la revendication 13, dans laquelle le sac (2) comprend une ouverture (4) présentant une section maximale de 15 à 40 cm à proximité de sa partie supérieure et le corps du récipient (2) présentant une section d'au moins 50 cm, le sac étant équipé d'au moins une boucle (1) à proximité de sa partie supérieure.

15. Méthode selon la revendication 14, dans laquelle le sac (2) est équipé d'une ouverture refermable (5) au niveau de sa partie inférieure.
